Europäisches Patentamt

European Patent Office

Office européen des brevets

(19)

(11) EP 0 778 677 B1

(12) **FASCICULE DE BREVET EUROPEEN**

(45) Date de publication et mention
de la délivrance du brevet:
**14.08.2002 Bulletin 2002/33**

(51) Int Cl.$^7$: **H04B 1/707**

(21) Numéro de dépôt: **96402608.2**

(22) Date de dépôt: **02.12.1996**

(54) **Circuit numérique pour récepteur différentiel de signaux à étalement de spectre par séquence directe**

Digitale Schaltung für Differentialempfänger eines Direktsequenzspreizspektrumsignals

Digital circuit for differential receiver of direct sequence spread spectrum signals

(84) Etats contractants désignés:
**CH DE GB IT LI**

(30) Priorité: **04.12.1995 FR 9514322**

(43) Date de publication de la demande:
**11.06.1997 Bulletin 1997/24**

(73) Titulaire: **COMMISSARIAT A L'ENERGIE ATOMIQUE**
**75015 Paris Cédex 15 (FR)**

(72) Inventeurs:
• **Lattard, Didier**
**38680 Rencurel (FR)**
• **Lequepeys, Jean-René**
**38600 Fontaine (FR)**
• **Piaget, Bernard**
**38610 Venon (FR)**
• **Danièle, Norbert**
**38330 Montbonnot (FR)**

(74) Mandataire: **Signore, Robert et al**
**c/o BREVATOME**
**3, rue du Docteur Lanceraux**
**75008 Paris (FR)**

(56) Documents cités:
**DE-A- 3 735 374      US-A- 5 253 268**

• **PATENT ABSTRACTS OF JAPAN vol. 95, no. 010 & JP 07 283762 A (FUJITSU GENERAL LTD), 27 Octobre 1995,**

## Description

### Domaine technique

La présente invention a pour objet un circuit numérique pour récepteur différentiel de signaux à étalement de spectre par séquence directe.

### Etat de la technique

La technique de modulation à étalement de spectre par séquence directe est utilisée depuis de nombreuses années, en particulier dans les radiocommunications avec les satellites et dans le domaine militaire.

Dans un émetteur de données numériques utilisant une technique de modulation classique, les données à émettre modulent une porteuse radio. La modulation employée peut être une modulation de phase, de fréquence ou d'amplitude ou une modulation mixte. Pour simplifier l'exposé, on se limitera aux modulations de phase, qui sont aujourd'hui les plus utilisées.

Les données numériques à transmettre sont des éléments binaires, ou bits. Ces bits ont une période $T_b$, c'est-à-dire que tous les $T_b$ il faut transmettre un nouveau bit. Avec ces bits, on peut constituer des groupes de bits, appelés encore symboles, dont la période est notée $T_s$ et est un multiple de $T_b$. Ce sont ces symboles qui vont moduler la porteuse radio, par exemple en phase.

Deux exemples de modulation de phase peuvent illustrer cette technique :

a) la modulation dite BPSK (pour "Binary Phase Shift Keying") ; elle consiste à affecter un état de phase, par exemple 0, aux bits 0, et un état de phase $\pi$ aux bits 1 ; 1 dans ce cas, le symbole est le bit lui-même et $T_s = T_b$, la porteuse radio voit son état de phase imposé tous les bits ;

b) la modulation dite QPSK (pour "Quaternary Phase Shift Keying") ; elle consiste à utiliser des symboles formés par deux bits successifs ; ces symboles peuvent donc prendre quatre états (00, 01, 10, 11) ; on affecte un état de la phase de la porteuse à chacun de ces états ; dans ce cas, $T_s = 2T_b$ et la porteuse radio voit son état de phase imposé tous les deux bits.

Côté réception, il faut démoduler le signal reçu. On distingue deux grandes familles de démodulation : la démodulation cohérente et la démodulation non cohérente. La technique de démodulation cohérente consiste à réaliser, dans le récepteur, un sous-ensemble dont le rôle est d'estimer la phase moyenne de la porteuse, de manière à reconstituer une référence de phase. Cette référence de phase est ensuite mélangée avec le signal reçu pour démoduler les données.

La technique de démodulation non cohérente est fondée sur l'observation selon laquelle il suffit que la référence de phase du symbole en cours soit comparée à la phase du symbole précédent. Dans ce cas, le récepteur n'estime pas la phase des symboles mais la différence de phase entre deux symboles successifs. On se trouve alors en présence d'une modulation différentielle de phase DPSK ("Differential Phase Shift Keying") ou DQPSK ("Differential Quadrature Phase Shift Keying").

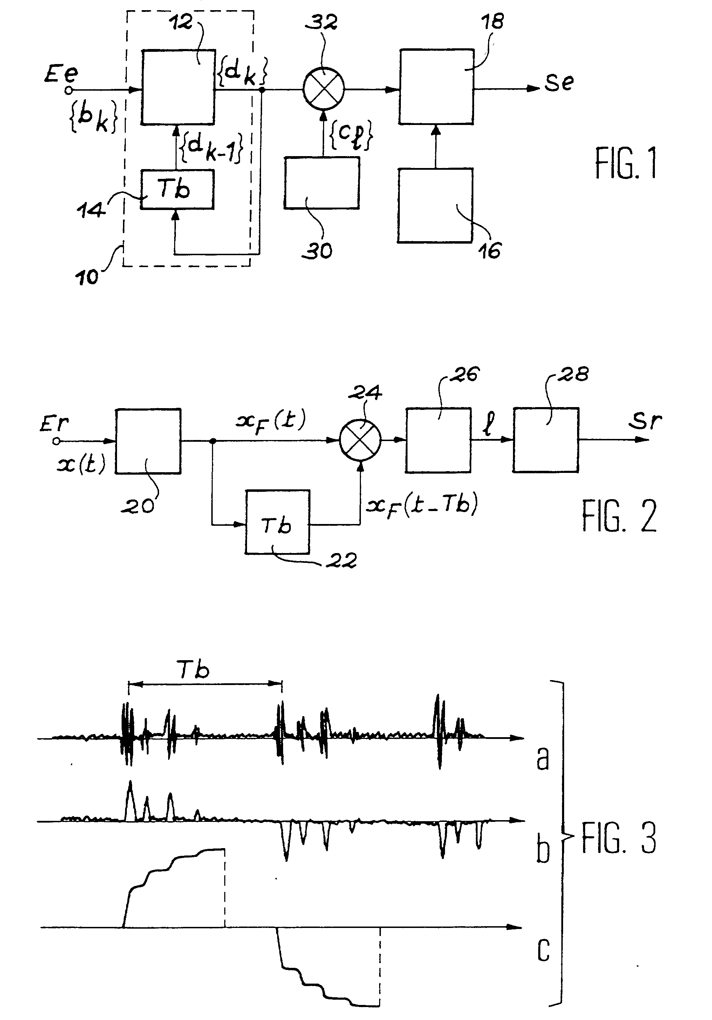

Les figures 1 à 3 annexées montrent schématiquement la structure et le fonctionnement d'un émetteur et d'un récepteur à étalement de spectre fonctionnant en DPSK. Cet état de la technique correspond au document FR-A-2 712 129.

La figure 1, tout d'abord, montre le schéma synoptique d'un émetteur. Cet émetteur possède une entrée Ee, qui reçoit les données $b_k$ à émettre et il comprend un codeur différentiel 10, composé d'un circuit logique 12 et d'un circuit à retard 14 ; l'émetteur comprend encore un générateur 30 de séquences pseudoaléatoires, un multiplexeur 32, un oscillateur local 16 et un modulateur 18 relié à une sortie Se, qui délivre le signal DPSK.

Le circuit logique 12 reçoit les données binaires $b_k$ et délivre des données binaires $d_k$. Le circuit logique 12 reçoit également les données retardées d'un rang soit $d_{k-1}$. L'opération logique effectuée dans le circuit 12 est l'opération OU-exclusif sur les données $b_k$ et sur le complément de $d_k$ retardé (c'est-à-dire sur $\overline{d_{k-1}}$) :

$$d_k = b_k \oplus \overline{d_{k-1}}$$

La séquence pseudoaléatoire utilisée à l'émission pour moduler les données doit posséder une fonction d'autocorrélation présentant un pic marqué (de valeur N) pour un retard nul et des lobes secondaires le plus faible possible. Ceci peut être obtenu en utilisant des séquences de longueur maximale (appelées aussi m-séquence) ou des séquences dites de GOLD ou de KASAMI par exemple. Cette séquence pseudoaléatoire, notée $\{C_1\}$, possède un débit binaire N fois plus élevé que le débit des données binaires à transmettre. La durée $T_c$ d'un élément binaire de cette séquence pseudoaléatoire, élément appelé aussi "chip", est donc égale à $T_b/N$.

Le débit en "chips" de la séquence pseudoaléatoire peut être de plusieurs millions, voire de plusieurs dizaines de millions par seconde.

La figure 2 annexée montre le schéma synoptique d'un récepteur correspondant, du type démodulateur différentiel. Ce récepteur possède une entrée Er et comprend un filtre adapté 20, dont la réponse impulsionnelle est la renversée dans le temps de la séquence pseudoaléatoire utilisée dans l'émetteur, un circuit à retard d'une durée $T_b$ référencé 22, un multiplieur 24, un intégrateur 26 sur une période $T_b$ et un circuit logique de décision 28. Le récepteur possède une sortie Sr qui restitue les données.

Si l'on note x(t) le signal appliqué à l'entrée Er, le multiplieur 24 reçoit le signal filtré $x_F(t)$ et le signal filtré-retardé $x_F(t-T_b)$. Le produit est intégré sur une période inférieure ou égale à $T_b$ dans l'intégrateur 26, lequel délivre un signal dont la polarité permet de déterminer la valeur du bit transmis.

Le filtre d'entrée 20 utilisé dans le récepteur possède une réponse impulsionnelle équivalente en bande de base, notée H(t), et cette réponse doit être le complexe conjugué renversé dans le temps de la séquence pseudoaléatoire c(t) utilisée à l'émission :

$$H(t)=c*(T_b-t)$$

Le signal délivré par un tel filtre vaut donc :

$$x_F(t) = x(t) * H_F(t)$$

où le signe * désigne l'opération de convolution, soit

$$x_F(t) = \int_0^{T_b} x(s).c * (s - t)ds.$$

Le filtre adapté 20 réalise donc la corrélation entre le signal appliqué à son entrée et la séquence pseudoaléatoire d'étalement.

Dans un canal à bruit additif gaussien, le signal $x_F(t)$ va donc se présenter sous la forme d'un signal impulsionnel, la fréquence de répétition des impulsions étant égale à $1/T_b$. L'enveloppe de ce signal est la fonction d'autocorrélation du signal c(t). L'information est véhiculée par la différence de phase entre deux pics de corrélation successifs.

La sortie du multiplieur va donc être formée d'une succession de pics positifs ou négatifs, suivant la valeur du bit transmis.

Dans le cas d'une transmission radio en présence de trajets multiples, la sortie du filtre adapté va être formée d'une succession de pics de corrélation, chaque pic correspondant à un trajet de propagation.

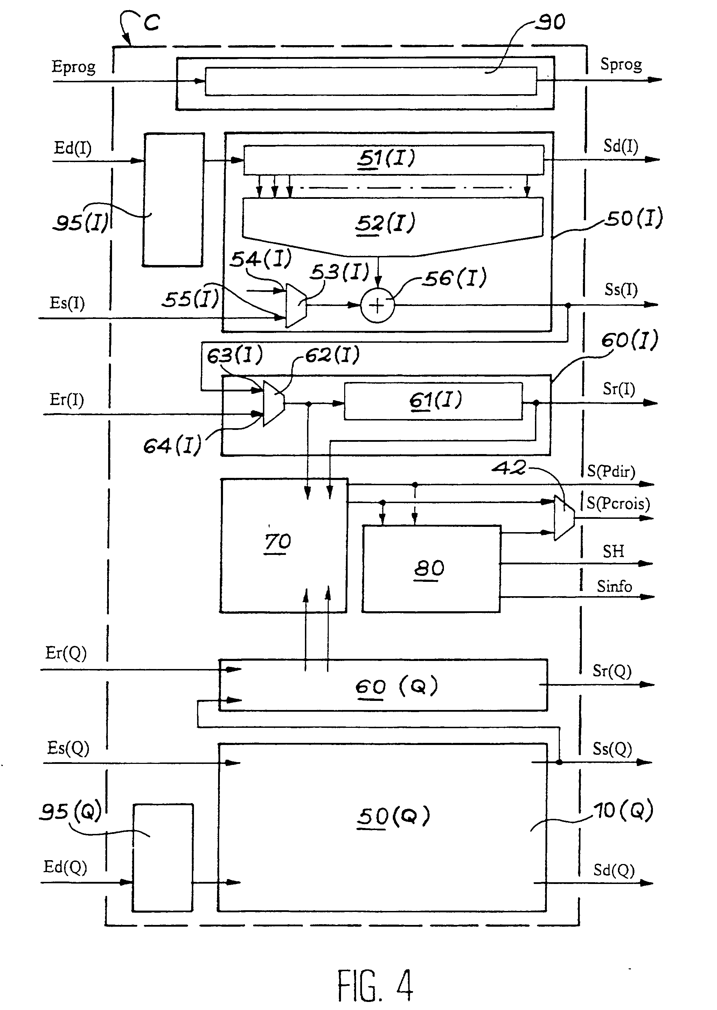

Les différents signaux de la chaîne de réception sont représentés sur la figure 3. La ligne (a) représente le signal filtré $x_F(t)$ ; la ligne (b) le signal de corrélation $x_F(t)*x_F(t-T_b)$ ; la ligne (c) le signal à la sortie de l'intégrateur.

La technique de modulation à étalement de spectre par séquence directe est largement décrite dans la littérature spécialisée. On peut citer, par exemple, les ouvrages suivants :

- "CDMA Principles of Spread Spectrum Communication", par Andrew J. VITERBI, Addison-Wesley Wireless Communications Series ;
- "Spread Spectrum Communications", par Marvin K. SIMON et al., vol. I, 1983, Computer Science Press ;
- "Spread Spectrum Systems", par R.C. DIXON, John WILEY and Sons.

Cette technique est également décrite dans certains articles :

- "Direct-sequence Spread Spectrum with DPSK Modulation and Diversity for Indoor Wireless Communications", publié par Mohsen KAVEHRAD et Bhaskar RAMAMURTHI dans la revue "IEEE Transactions on Communications", vol. COM 35, n°2, février 1987 ;
- Practical Surface Acoustice Wave Devices", par Melvin G. HOLLAND, dans la revue Proceedings of the IEEE, vol. 62, n°5, mai 1974, pp. 582-611.

Les avantages de la technique à étalement de spectre par séquence directe sont multiples. On peut citer, notamment :

- la discrétion : cette discrétion est liée à l'étalement de l'information transmise sur une large bande de fréquence ; il en résulte une faible densité spectrale de la puissance émise ;
- l'accès multiple : plusieurs liaisons à étalement de spectre par séquence directe peuvent partager la même bande de fréquence en utilisant des séquences pseudoaléatoires d'étalement orthogonales (séquences possédant une fonction d'intercorrélation qui présente du bruit résiduel très faible pour tous les décalages) ; cette technique, qui porte le nom d'accès multiple par les codes (AMRC en abrégé ou CDMA en anglais) est difficile à mettre en oeuvre car elle impose un réglage délicat de la puissance émise (un récepteur d'une liaison ne doit pas être aveuglé par un émetteur voisin d'une autre liaison) ;
- une bonne cohabitation avec les communications à bande étroite classique : en effet, la même bande de fréquence peut être partagée par les systèmes utilisant une modulation à bande étroite et ceux qui utilisent une modulation à large bande ; les communications à bande étroite ne voient qu'une légère augmentation du bruit radioélectrique ambiant, d'autant plus faible que la longueur de la séquence sera grande ; les communications à modulation à étalement de spectre opèrent une réjection des modulations à bande étroite grâce à l'opération de corrélation effectuée à la réception ;
- la difficulté d'interception : une transmission à étalement de spectre par séquence directe est difficile à intercepter en raison de la faible densité spectrale et du fait que le récepteur doit connaître la séquence d'étalement pour pouvoir moduler les données ;
- un excellent comportement dans un environnement multi-trajet : dans ce type d'environnement, la propagation de l'onde radioélectrique s'effectue selon des trajets multiples qui mettent en jeu des phénomènes de réflexion, de diffraction et de diffusion ; en outre, il n'est pas rare qu'il n'y ait plus de trajet direct stable dans le temps entre l'émetteur et le récepteur ; cette propagation par trajets multiples induit des effets parasites qui tendent à dégrader la qualité de la transmission.

Si cette technique de l'étalement de spectre présente de nombreux avantages, elle se heurte néanmoins à des difficultés, surtout dans la réalisation du récepteur et plus particulièrement dans la mise en oeuvre des fonctions de filtrage adapté et de retard.

Dans l'art antérieur, plusieurs solutions ont été proposées. Selon une première solution, la fonction de filtrage adapté est obtenue par une technique utilisant les ondes acoustiques de surface ; c'est ce qui est décrit par exemple dans les deux articles suivants :

- "Design and experimental results for a direct-sequence spread-spectrum radio using differential phase shift keying modulation for wireless communications" de M. KAVEHRAD et al., publié dans IEEE Journal on SAC, vol. SAC 5, juin 1987, pp. 815-823 ;
- "Practical Surface Acoustic Wave Devices", de Melvin G. HOLLAND, publié dans Proceedings of the IEEE, vol. 62, n°5, mai 1974, pp. 582-611.

Selon une autre solution, un seul composant remplit les deux fonctions de filtrage adapté et de retard ; pour cela on réalise :

- un premier corrélateur assurant la fonction de filtrage adapté (corrélation entre un signal appliqué à son entrée et la séquence pseudoaléatoire),
- un second corrélateur dont le signal de sortie est retardé d'une durée égale à la durée d'un symbole ; dans ce cas, le retard est un retard engendré par le temps de propagation de l'onde acoustique le long du substrat.

Cette technique est décrite dans le document FR-A-2 696 298.

Ces solutions présentent néanmoins encore des inconvénients :

- comme la séquence pseudoaléatoire est fixée par le composant à ondes acoustiques de surface, à travers la forme des électrodes, il n'est pas possible d'en changer ; autrement dit, le composant n'est pas programmable ;
- les pertes d'insertion dues à ce composant sont très grandes (environ 40 dB) ; ; elles entraînent une complexité accrue de l'étage amplificateur ;
- le coût de réalisation est élevé et le délai de fabrication long ;
- la longueur de la séquence pseudoaléatoire se trouve limitée, en raison de la taille limitée du composant à ondes acoustiques de surface ; la limite se situe à environ 512 chips.

Récemment, sont apparus des composants numériques permettant la réalisation des fonctions de filtrage adapté et de retard. Ces circuits sont commercialisés sous forme du circuit STEL 200A de la Société américaine STANDFORD TELECOM ou sous la forme du circuit S 20043 de la Société américaine AMI.

Cette technique numérique est intéressante, car elle permet de programmer le filtre adapté et donc de choisir une séquence pseudoaléatoire. Par ailleurs, les pertes d'insertion sont très faibles, voire inexistantes, ce qui réduit la complexité de l'étage amplificateur. Enfin, le coût de production est nettement plus bas qu'avec les composants à ondes acoustiques de surface.

Mais ces composants numériques présentent eux-mêmes des inconvénients, notamment parce qu'ils sont limités en longueur vis-à-vis de la séquence pseudoaléatoire et par leur fréquence de travail. Ces deux limitations font que le gain de traitement est limité et que le pouvoir de séparation (donc l'ordre de diversité) de deux trajets est relativement bas. En effet, ces circuits fonctionnent à une vitesse de modulation de chip maximale de 20 Méga chips par seconde. Cette vitesse permet de calculer la différence temporelle nécessaire pour que l'on puisse distinguer deux trajets. Cette différence est de 50 ns, ce qui correspond à une distance de 15 m. Sachant que la largeur de la réponse impulsionnelle à l'intérieur des bâtiments est de l'ordre de 100 ns, on sera capable, avec ce type de composant, de distinguer au plus deux chemins et d'avoir ainsi un ordre de diversité seulement égal à 2.

La présente invention a pour but de remédier à ces inconvénients.

Le document DE 3735374 décrit un exemple de réalisation, avec des composants numériques, d'un filtre adapté utilisé dans un système de communication à étalement de spectre

## Exposé de l'invention

L' invention propose un circuit qui permet de modifier les caractéristiques liées à la séquence pseudo-aléatoire, à savoir essentiellement sa longueur et sa définition. Par ailleurs, le circuit de l'invention est conçu pour pouvoir être monté en cascade. L'ensemble des circuits de la cascade se comporte alors, d'une certaine manière, comme un circuit unique, définissant une séquence pseudoaléatoire globale qui est formée par les diverses séquences mises bout à bout.

De façon précise, l'invention a pour objet un circuit numérique pour récepteur différentiel de signal à étalement de spectre par séquence directe, ce signal correspondant à une émission d'une porteuse qui a été modulée par des symboles binaires véhiculant une information, ces symboles ayant été multipliés par une séquence pseudoaléatoire, ce circuit étant caractérisé par le fait qu'il comprend :

a) une première voie de traitement numérique recevant une première partie du signal reçu, cette première partie étant la partie en phase avec la porteuse, cette première voie comprenant :

    i) des premiers moyens numériques aptes à remplir une première fonction de filtrage correspondant à une séquence pseudoaléatoire utilisée à l'émission,
    ii) des premiers moyens numériques aptes à remplir une première fonction de retard,

b) une seconde voie de traitement numérique recevant une seconde partie du signal reçu, cette seconde partie étant la partie en quadrature de phase avec la porteuse, cette seconde voie comprenant :

    i) des seconds moyens numériques aptes à remplir une seconde fonction de filtrage correspondant à ladite séquence pseudoaléatoire,
    ii) des seconds moyens numériques aptes à remplir une fonction de retard,

c) un circuit de multiplication possédant :

- deux premières entrées, l'une reliée à la sortie des premiers moyens numériques de filtrage et recevant un premier signal filtré et l'autre reliée à la sortie des premiers moyens aptes à remplir la fonction de retard et recevant un premier signal filtré-retardé,
- deux secondes entrées, l'une reliée à la sortie des seconds moyens numériques de filtrage et recevant un second signal filtré et l'autre reliée à la sortie des seconds moyens aptes à remplir la fonction retard et recevant un second signal filtré-retardé,
- des moyens pour calculer les deux produits directs entre signaux filtrés et filtrés-retardés de la première et de la seconde voies et les deux produits croisés entre signal filtré d'une voie et signal filtré-retardé de l'autre voie,
- des moyens pour calculer la somme des produits directs et la différence des produits croisés,

d) un circuit d'intégration et de régénération d'horloge recevant ladite somme des produits directs et ladite différente des signaux produits croisés,
e) un moyen numérique de programmation contenant des informations aptes à programmer notamment les premiers et seconds moyens de filtrage.

La présente invention a également pour objet un circuit qui comprend une pluralité de circuits tels que celui qui vient d'être défini, ces circuits étant montés en cascade. Le premier circuit (C1) de la cascade reçoit, sur une entrée générale, les première et seconde parties (I, Q) du signal reçu ; chaque circuit de la cascade qui n'est pas à une extrémité de la cascade a ses sorties de filtrage et de retard reliées aux entrées de filtrage et de retard du circuit qui suit, chacun des moyens de filtrage, ajoutant à son résultat, par un circuit de sommation, le résultat des moyens de filtrage du circuit précédent et transmettant la somme à l'entrée des moyens de filtrage du circuit suivant.

La séquence pseudoaléatoire globale utilisée dans un tel récepteur à cascade de circuits est alors constituée par l'ensemble des séquences pseudoaléatoires utilisée dans chacun des circuits, le dernier circuit de la cascade étant le seul à avoir son circuit de multiplication et son circuit d'intégration et de régénération d'horloge activés, ce dernier circuit d'intégration restituant alors l'information sur sa sortie.

## Brève description des dessins

- la figure 1, déjà décrite, est un schéma synoptique d'un émetteur connu à étalement de spectre ;
- la figure 2, déjà décrite, est un schéma synoptique d'un récepteur connu à étalement de spectre ;
- la figure 3, déjà décrite, illustre le fonctionnement général d'un récepteur ;
- la figure 4 montre la structure générale d'un circuit conforme à l'invention ;
- la figure 5 montre la structure générale du bloc d'intégration et de régénération d'un signal d'horloge ;
- la figure 6 illustre le fonctionnement du bloc précédent ;
- la figure 7 illustre un récepteur différentiel comprenant une cascade de circuits tels que celui de la figure 4.

## Exposé détaillé de modes de réalisation

Avant de décrire la structure du circuit de l'invention, quelques rappels s'imposent sur la nature des signaux traités et sur les principes de leur traitement.

On considère une porteuse de pulsation w, modulée en phase par une fonction du temps P(t). Le signal modulé peut s'écrire :

$$s(t) = A(t)cos[wt + P(t)]$$

où A(t) est l'amplitude du signal.

Cette expression peut se développer en :

$$s(t) = A(t)cos\ wt\ cos\ P(t) - A(t)\ sin\ wt\ sin\ P(t)$$

En notant I(t) la partie A(t)cosP(t), qui est en phase avec la porteuse et Q(t) la partie A(t)sinP(t), qui est en quadrature avec la porteuse, on peut encore ce dernier signal sous la forme :

$$s(t) = I(t)\ cos\ wt - Q(t)\ sin\ wt$$

Il est commode alors de considérer le signal complexe S(t) :

$$S(t)=U(t)exp(jwt)$$

avec U(t)=I(t)+jQ(t). Le signal vrai s(t) correspond alors à la partie réelle du signal complexe S(t).

Le traitement du signal s(t) peut donc s'effectuer par le double traitement des parties I(t) et Q(t) qu'on notera plus simplement, par la suite, I et Q.

Les processeurs qui traitent de tels signaux reçoivent en général, sur deux entrées distinctes, les signaux I et Q. Ces signaux sont obtenus en multipliant le signal de réception par une onde soit en phase avec la porteuse soit en quadrature avec celle-ci. Les processeurs effectuent ensuite divers traitements selon les modulations exploitées. On trouve ainsi, dans le cas de la modulation différentielle de phase, des traitements qui consistent à former la somme ou la différence des produits d'échantillons retardés, comme par exemple :

$$I_k I_{k-1} + Q_k Q_{k-1}$$

et

$$Q_k I_{k-1} - I_k Q_{k-1}$$

où k désigne le rang d'un échantillon.

La première expression est dite "Dot" et la seconde "Cross" en terminologie anglo-saxone, on peut montrer aisément que le produit d'un échantillon de rang k du signal s(t), soit s(k), par l'échantillon antérieur conjugué, soit s*(k-1), produit qui est calculé dans le récepteur pour démoduler le signal (cf multiplieur 24 sur la figure 2), est à une rotation de phase fixe près, de la forme :

$$Dot(k)+jCross(k).$$

Le produit "Dot" permet la détermination du déphasage entre deux symboles successifs, alors que les produits "Dot" et "Cross", pris ensemble, permettent de déterminer le nombre entier de fois $\pi/2$ du déphasage entre symboles successifs. Ces produits "Dot" et "Cross" permettent donc la démodulation correcte et sans ambiguïté lorsqu'une modulation différentielle de phase a été utilisée à l'émission.

Un récepteur de signaux à étalement de spectre forme donc, d'abord, les parties en phase et en quadrature I et Q et effectue ensuite un filtrage adapté et une corrélation sur chacun de ces signaux. A partir des échantillons obtenus, le récepteur calcule les signaux "Dot" et "Cross" et, à partir de là, restitue l'information véhiculée par le signal reçu.

S'agissant maintenant du circuit de l'invention, sa structure générale est représentée sur la figure 4. Ce circuit comprend deux voies similaires, l'une traitant la partie I en phase et l'autre la partie Q en quadrature. Les références des moyens constituant ces deux voies sont affectées d'un indice I ou d'un indice Q, selon l'appartenance à la première ou à la seconde voie. Par ailleurs, ce circuit comprend sept entrées, à savoir : trois entrées pour la voie I, (respectivement Ed(I) qui est une entrée de données et deux entrées Es(I) et Er(I) qui sont des entrées de signal respectivement filtré et filtré-retardé), trois entrées pour la voie Q, (respectivement Ed(Q), Es(Q) et Er(Q)) et enfin une septième entrée, Eprog, qui permet d'entrer des données de programmation.

Le circuit comprend encore onze sorties, à savoir : trois sorties pour la voie I, (respectivement Sd(I) pour les données, Ss(I) pour le signal filtré et Sr(I) pour le signal filtré-retardé), trois sorties pour la voie Q, (à savoir Sd(Q), Ss(Q) et Sr(Q)), une sortie de signal "Dot" ou produit direct, soit S(Pdir), une sortie de signal "Cross" ou produit croisé S(Pcrois), une sortie d'horloge SH, une sortie d'information Sinfo, et enfin une sortie Spro de programmation.

Lorsque le circuit de la figure 4 est l'unique circuit du récepteur, certaines entrées sont inopérantes, comme les entrées Es(I), Er(I), Es(Q) et Er(Q), ainsi que certaines sorties comme Spro, Sd(I), Ss(I), Sr(I), Sd(Q), sS(Q), Sr(Q).

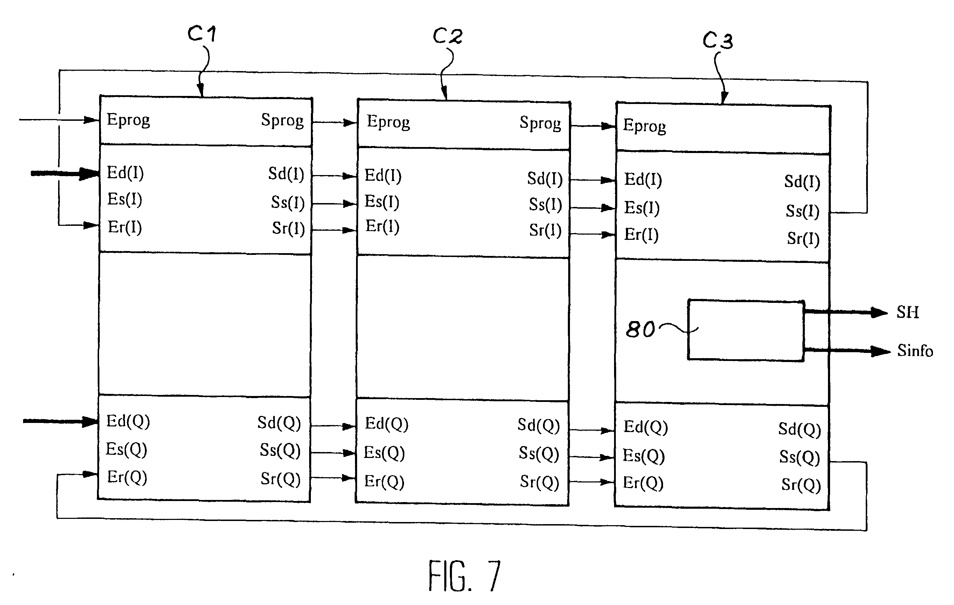

Lorsque le circuit est connecté en cascade à d'autres circuits semblables, les sorties de l'un sont reliées aux entrées correspondantes du circuit qui suit, comme il sera expliqué plus loin en liaison avec la figure 7.

En dehors des entrées et sorties, la structure générale du circuit est la suivante. Ce circuit comprend d'abord une première voie de traitement numérique de la partie I en phase avec la porteuse, c'est-à-dire, en pratique, des données appliquées sur l'entrée Ed(I). Cette première voie comprend :

    i) des premiers moyens numériques 50(I) aptes à remplir une première fonction de filtrage correspondant à une séquence pseudoaléatoire utilisée à l'émission,
    ii) des premiers moyens numériques 60(I) aptes à remplir une première fonction de retard.

Le circuit comprend encore une seconde voie de traitement numérique recevant la seconde partie Q du signal reçu, cette seconde partie étant en quadrature de phase avec la porteuse. En pratique, cette seconde voie reçoit les données appliquées sur l'entrée Ed(Q) et comprend comme la première :

    i) des seconds moyens numériques aptes à remplir une seconde fonction de filtrage correspondant à ladite séquence pseudoaléatoire,
ii) des seconds moyens numériques aptes à remplir une fonction de retard.

Le circuit représenté comprend encore un circuit de multiplication 70 possédant :

- deux premières entrées, l'une reliée à la sortie des premiers moyens numériques 50(I) de filtrage et recevant un premier signal filtré $I_k$ et l'autre reliée à la sortie des premiers moyens aptes à remplir la fonction de retard 61(I) et recevant un premier signal filtré-retardé $I_{k-1}$,
- deux secondes entrées, l'une reliée à la sortie des seconds moyens numériques 50(Q) de filtrage et recevant un second signal filtré $Q_k$ et l'autre reliée à la sortie des seconds moyens aptes à remplir la fonction retard 61(Q) et recevant un second signal filtré-retardé $Q_{k-1}$,
- des moyens pour calculer les deux produits directs entre signaux filtrés et filtrés-retardés de la première et de la seconde voies à savoir $I_k I_{k-1}$ et $Q_k Q_{k-1}$, et les deux produits croisés entre signal filtré d'une voie et signal filtré-retardé de l'autre voie, à savoir $Q_k I_{k-1}$, et $I_k Q_{k-1}$,
- des moyens pour calculer la somme des produits directs, soit $I_k I_{k-1} + Q_k Q_{k-1}$ et la différence des produits croisés, soit $Q_k I_{k-1} - I_k Q_{k-1}$.

Le circuit présenté sur la figure 4 comprend encore un circuit d'intégration et de régénération d'horloge 80 recevant la somme des produits directs et la différence des produits croisés. Le circuit de la figure 4 comprend encore un moyen numérique de programmation 90 contenant des informations aptes à programmer notamment les premiers et seconds moyens de filtrage 50(I), 50(Q).

Dans la variante illustrée, les premiers et seconds moyens numériques 50(I) et 50(Q), aptes à remplir la première et la seconde fonctions de filtrage, comprennent (seuls les moyens de la première voie sont représentés) un registre à décalage 51(I), un additionneur-soustracteur 52(I), une porte 53(I) ayant une entrée de commande 54(I) et une entrée de signal 55(I) recevant un signal filtré venant de l'entrée Es(I) et un circuit de sommation 56(I) ayant une première entrée reliée à la sortie de l'additionneur-soustracteur 52(I) et une seconde entrée reliée à la sortie de la porte 53(I).

Dans la variante illustrée, les premiers et seconds moyens numériques 60(I), 60(Q) aptes à remplir la première et la seconde fonctions de retard comprennent (seuls les moyens de la première voie sont représentés) un multiplexeur 62(I) avec une entrée reliée à la sortie du circuit de sommation 56(I) et une autre entrée reliée à l'entrée Er(I) de signal retardé, et une mémoire à accès direct 61(I) à une entrée reliée à la sortie du multiplexeur 62(I) et une sortie Sr(I) délivrant un signal retardé.

De préférence, les deux voies comprennent en outre un premier et un second circuits de mise en forme et de sommation 90(I), 90(Q) disposés devant, respectivement, les premiers et seconds moyens de filtrage 50(I), 50(Q).

Le moyen numérique de programmation 90 comprend un registre à décalage à une entrée Epro et des sorties reliées aux premier et second registres à décalage des deux voies, reliées également aux premier et second additionneur-soustracteurs 52(I) des premier et second moyens de filtrage 50(I), 50(Q), reliées encore aux premières entrées 54(I) de la première et seconde portes 53(I) des premier et second moyens de retard 60(I), 60(Q) et reliées enfin au moyen de multiplication 70 et aux moyens d'intégration 80.

Le fonctionnement du circuit de la figure 4 est alors le suivant.

D'une manière très générale, les informations à traiter sont présentées au circuit en bande de base par les entrées Ed(I) et Ed(Q). Les traitements sont identiques sur les deux voies. Les blocs 70 et 80 réunissent les données en bandes de base et construisent les pics de corrélation ; ils en déduisent l'information binaire correspondant au message reçu. L'information est disponible sur la sortie Sinfo. Le bloc 90 intervient dans la configuration du circuit et permet de figer les différents paramètres. Il n'a pas de rôle direct dans le traitement des données.

D'une manière plus détaillée, le bloc 95 (autrement dit le bloc 95(I) pour la voie I et le bloc 95(Q) pour la voie Q) est un sommateur placé en tête de chaque voie. Il permet de prendre en compte de 1 à 5 échantillons par période de chip. Les données prises en compte sont les informations brutes en bande de base numérisées sur 4 bits, à une fréquence d'échantillonnage.

Le bloc 50 (respectivement 50(I), 50(Q)) permet de réaliser le filtrage adapté des données délivrées par le sommateur de tête. Il met en oeuvre des registres pour créer un voisinage pouvant aller jusqu'à 128 données et des additionneurs-soustracteurs pour réaliser la fonction de convolution : chaque donnée est multipliée par un coeffient de la séquence pseudoaléatoire et l'ensemble des 128 produits obtenus est sommé. De plus, le bloc de filtrage, pour tenir compte de l'aspect cascadable du composant, dispose d'un sommateur supplémentaire 56 (respectivement 56 (I), 56(Q)) permettant de recombiner le résultat partiel du circuit voisin précédent (par les entrées Es(I) et Es(Q)) avec son propre calcul, et transmet le résultat au circuit suivant (par les sorties Ss(I) et Ss(Q)). Les informations transitant dans ces circuits sont codés sur 8 bits.

Le bloc 60 (respectivement 60(I) et 60(Q) a pour fonction de retarder le résultat du filtrage adapté. Dans le cas d'un circuit unique, les informations prises en compte sont celles qui viennent de l'additionneur-soustracteur. Le retard est réalisé grâce à une mémoire de type à accès direct (ou RAM) à double entrée : la première entrée est utilisée en écriture (information à retarder) et l'autre en lecture (information retardée), la différence entre les deux adresses correspondant au retard souhaité. Les informations sont transmises ensuite au bloc 70 de multiplication.

Ce bloc 70 de multiplication réalise une multiplication complexe entre le résultat du filtrage et la même information retardée. Les calculs effectués permettent d'obtenir une somme de produits directs SPD et une différence de produits croisés DPC :

$$SPD = I_k I_{k-1} + Q_k Q_{k-1}$$

$$DPC = Q_k I_{k-1} - I_k Q_{k-1}$$

Les principaux opérateurs utilisés pour ces calculs sont quatre multiplieurs 8 bits et deux additionneurs. Les résultats sont ramenés sur une dynamique de 10 bits.

Le bloc 80 scrute en permanence les données émises par le bloc 70 sur la sortie S(Pdir). Il détecte et suit les pics de corrélation afin d'enregistrer une horloge Hinfo cadencée à la fréquence symbole Ts ; il intègre le signal somme des produits directs dans une plage temporelle centrée autour du pic de plus forte amplitude afin de produire la donnée binaire représentant l'information. Celle-ci apparaît sur la sortie Sinfo.

La configuration du circuit général est assurée par le bloc 90. Les différents paramètres, tels que la longueur de la séquence, les valeurs des coefficients binaires de la séquence pseudoaléatoire, la mise en cascade des unités de calcul, la gestion de l'ensemble des chemins de données, la durée d'intégration, sont configurables. Un registre à décalage par exemple de 253 bits contient les informations appropriées. Ce registre est chargé avant l'utilisation du circuit. Les bits de configuration sont présentés en série par l'entrée Eprog.

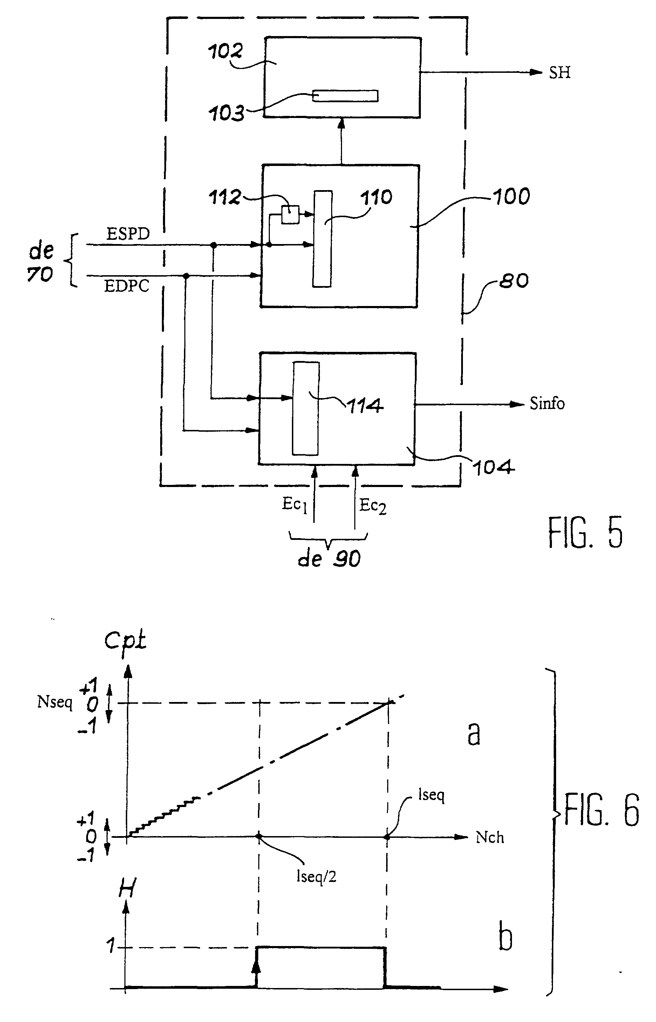

La figure 5 montre un mode de réalisation du circuit 80 d'intégration et de régénération d'horloge. Ce circuit comprend un moyen de détection 100, un moyen de régénération d'horloge 102 et un moyen d'intégration 104. Le circuit 80 possède deux premières entrées $E_{SPD}$ et $E_{DPC}$ qui reçoivent du circuit 70, respectivement, la somme des produits directs (ou "Dot") et la différence des produits croisés (ou "Cross"). Le circuit 80 possède encore deux entrées de consigne, respectivement Ec1 et Ec2, qui reçoivent du circuit 90 les informations sur le début de l'intégration et sur la longueur de l'intégration. Le circuit 80 comprend deux sorties, SH délivrant un signal d'horloge et Sinfo délivrant l'information restituée.

Le moyen 102 comprend essentiellement un compteur 103 s'incrémentant à chaque période chip (Tc). La valeur minimale du compteur est réglée soit à 0, soit à 1, soit à 2. La capacité du compteur correspond au nombre total de chips dans une séquence, autrement dit à la longueur de la séquence, soit lseq. La durée de cette séquence est égale à Ts.

Quand la valeur minimale du compteur est fixée à 1, la période du compteur est précisément Ts, la période d'un symbole. Le réglage de la valeur minimale à une valeur différente de 1, à savoir 0 ou 2, permet d'augmenter ou de réduire la période du compteur d'une période chip, soit Tc. Quand le contenu du compteur parcourt toutes les valeurs de 0 à lseq, la période du compteur est égale à Ts+Tc ; quand le contenu du compteur va de 2 à lseq, la période est égale à Ts-Tc. Quand le contenu du compteur passe à la valeur maximale lseq, un signal H passe de 1 à 0 (front descendant). Quand le contenu du compteur passe à la moitié du contenu maximal, soit lseq/2, le signal H passe de 0 à 1 (front montant).

La figure 6 illustre ce fonctionnement avec, en haut, (a) la variation du contenu du compteur en fonction du nombre de chips reçu et, en bas, (b) le signal d'horloge H.

Les moyens 100 permettent de suivre les pics de corrélation. Ils comprennent essentiellement un comparateur 110 et un registre 112.

Le comparateur 110 permet de détecter un pic de forte amplitude dans une plage correspondant à la demi-période symbole (Ts/2).

La position du pic par rapport au front montant du signal d'horloge H va permettre de régler le compteur 103 en ajoutant ou retranchant 1 à la valeur la plus petite du compteur.

Comme le glissement du front montant de H par rapport aux pics détectés s'effectue à raison d'une période de chip (Tc) par période de symbole (Ts), le temps nécessaire maximum de synchronisation est défini par le produit de Ts par le nombre de chips par demi-symbole.

La restitution de la donnée s'effectue par le moyen 104 qui comprend essentiellement un accumulateur 114. L'accumulation est effectuée à partir du moment où la valeur du compteur 103 produisant l'horloge H est égale au signal marquant le début de l'intégration (entrée Ec1). L'accumulation est activée tant que la valeur du compteur générant l'horloge H est inférieure à la somme des signaux indiquant le début de l'intégration et la longueur de l'intégration (entrée Ec2). Une fois l'accumulation achevée, le signe de la donnée accumulée détermine la valeur de l'information qui sera émise sur le prochain front montant de H. Si le résultat de l'accumulation est négatif, l'information sera égale à "0", sinon l'information délivrée sera égale à "1".

Un signal de synchronisation peut indiquer qu'il y a synchronisation entre les pics de forte amplitude et la plage d'intégration, c'est-à-dire que l'information binaire issue de l'accumulation est significative.

La figure 7 illustre le cas où trois circuits identiques sont montés en cascade, soit C1, C2, C3. Les entrées du premier circuit C1 reçoivent les données I et Q du signal par leurs entrées Ed(I) et Ed(Q). Les sorties de ce premier circuit C1 sont connectées directement aux entrées correspondantes du deuxième circuit, soit C2. De même, les sorties de C2 sont reliées aux entrées correspondantes de C3. Seul le circuit C3 a ses circuits 70 de multiplication et 80 d'intégration activés, les autres circuits C1 et C2 ayant leurs moyens correspondants inactivés. De même, dans les circuits C1 et C2, la porte 53 est ouverte, de telle sorte que le chaînage se produise entre l'additionneur 56 et la sortie du moyen de filtrage du circuit précédent. Le dernier circuit C3 est le seul à disposer du résultat final concernant le filtrage. Ce résultat apparaît sur les sorties Ss(I) et Ss(Q) et ces résultats sont réinjectés dans le premier circuit, par les entrées Es(I) et Es(Q). Les blocs retard 60 sont eux aussi chaînés et forment un retard correspondant à la totalité des séquences mises bout à bout.

Pour ce qui est des moyens de sommation 95, seuls les moyens du premier circuit C1 sont utilisés. Les autres moyens des autres circuits C2, C3 sont transparents.

Pour trois circuits travaillant chacun sur 128 chips, l'ensemble travaille sur une séquence de 384 chips (3 fois 128).

Naturellement, l'invention ne se limite pas à la mise en cascade de trois circuits, mais peut englober tout nombre de circuits. Elle ne se limite pas non plus à des séquences de 128 chips mais peut utiliser des séquences de longueur quelconque.

**Revendications**

**1.** Circuit numérique pour récepteur différentiel de signal à étalement de spectre par séquence directe, ce signal correspondant à une émission d'une porteuse qui a été modulée par des symboles binaires véhiculant une information, ces symboles ayant été multipliés par une séquence pseudoaléatoire, ce circuit comprenant :

   a) une première voie de traitement numérique recevant une première partie (I) du signal reçu, cette première partie étant la partie en phase avec la porteuse, cette première voie comprenant :

   i) des premiers moyens numériques (50(I)) aptes à remplir une première fonction de filtrage adapté correspondant à une séquence pseudoaléatoire utilisée à l'émission,
   ii) des premiers moyens numériques (60(I)) aptes à remplir une première fonction de retard,

   b) une seconde voie de traitement numérique recevant une seconde partie (Q) du signal reçu, cette seconde partie étant la partie en quadrature de phase avec la porteuse, cette seconde voie comprenant :

   i) des seconds moyens numériques (50(Q)) aptes à remplir une seconde fonction de filtrage adapté correspondant à ladite séquence pseudoaléatoire,
   ii) des seconds moyens numériques (60(Q)) aptes à remplir une fonction de retard,

   ce circuit étant **caractérisé par le fait qu'**il comprend aussi:
   c) un circuit de multiplication (70) possédant :

   - deux premières entrées, l'une reliée à la sortie des premiers moyens numériques (50(I)) de filtrage et recevant un premier signal filtré ($I_k$) et l'autre reliée à la sortie des premiers moyens aptes à remplir la fonction de retard (61(I)) et recevant un premier signal filtré-retardé ($I_{k-1}$),
   - deux secondes entrées, l'une reliée à la sortie des seconds moyens numériques (50(Q)) de filtrage et recevant un second signal filtré ($Q_k$) et l'autre reliée à la sortie des seconds moyens aptes à remplir la fonction retard (61(Q)) et recevant un second signal filtré-retardé ($Q_{k-1}$),
   - des moyens pour calculer les deux produits directs entre signaux filtrés et filtrés-retardés de la première et de la seconde voies ($I_k I_{k-1}$), ($Q_k Q_{k-1}$) et les deux produits croisés entre signal filtré d'une voie et signal filtré-retardé de l'autre voie ($Q_k I_{k-1}$), ($I_k Q_{k-1}$),
   - des moyens pour calculer la somme des produits directs ($I_k I_{k-1}+Q_k Q_{k-1}$) et la différence des produits croisés ($Q_k I_{k-1}-I_k Q_{k-1}$)

d) un circuit d'intégration et de régénération d'horloge (80) recevant ladite somme des produits directs et ladite différente des signaux produits croisés.

2. Circuit selon la revendication 1, **caractérisé par le fait qu'**il comprend en outre un moyen numérique de programmation (90) contenant des informations aptes à programmer notamment les premiers et seconds moyens de filtrage (50(I), 50(Q)).

3. Circuit selon la revendication 1, **caractérisé par le fait que** les premiers et seconds moyens numériques (50(I)) aptes à remplir une première et une seconde fonctions de filtrage comprennent un registre à décalage (51(I)), un additionneur-soustracteur (52(I)), une porte (53(I)) ayant une entrée de commande (54(I)) et une entrée de signal (55(I)) recevant un signal filtré et un circuit de sommation (56(I)) ayant une première entrée reliée à la sortie de l'additionneur-soustracteur (52(I)) et une seconde entrée reliée à la sortie de la porte (53(I)).

4. Circuit selon la revendication 3, **caractérisé par le fait que** les premiers et seconds moyens numériques (60(I), 60(Q)) aptes à remplir une première et une seconde fonctions de retard comprennent un multiplexeur (62(I)) avec une entrée reliée à la sortie du circuit de sommation (56(I)) et une autre entrée reliée à une entrée (Er(I)) de signal retardé, et une mémoire à accès direct (61(I)) à une entrée reliée à la sortie du multiplexeur (62(I)) et une sortie (Sr(I)) délivrant un signal retardé.

5. Circuit selon la revendication 1, **caractérisé par le fait que** le circuit d'intégration et de régénération d'horloge (80) comprend :

   - des moyens (100) comprenant un comparateur (110) et un registre (112) pour suivre les pics de corrélation,
   - des moyens (102) comprenant un compteur de capacité égale au nombre de chips dans la séquence pseudo-aléatoire, ce compteur émettant une impulsion (H) ayant un front montant lorsque le contenu du compteur passe à la valeur moitié de la capacité maximale du compteur et un front descendant lorsque le contenu du compteur passe à la valeur de la capacité maximale,
   - des moyens de restitution d'information (104) comprenant un accumulateur (114) activé à partir d'un instant de début d'intégration et pendant une certaine durée, tous deux déterminés par le circuit de programmation.

6. Circuit selon la revendication 1, **caractérisé par le fait qu'**il comprend en outre un premier et un second circuits de mise en forme et de sommation (95(I), 95(Q)) disposés devant, respectivement, les premiers et seconds moyens de filtrage (50(I), 50(Q)).

7. Circuit selon la revendication 6, **caractérisé par le fait que** le moyen numérique de programmation (90) comprend un registre à décalage à une entrée (Epro) et des sorties reliées aux premier et second registres à décalage (51(I), 51(Q)), le premier et le second additionneur-soustracteurs (52(I), 52(Q)) des premier et second moyens de filtrage (50(I), 50(Q)), reliées également aux premières entrées (54(I), 54(Q)) de la première et seconde portes (53(I), 53(Q)) des premier et second moyens de retard (60(I), 60(Q)), reliées encore au moyen de multiplication (70) et aux moyens d'intégration (80) relié enfin aux premier et second moyens de mise en forme et de sommation (95(I), 95(Q).

8. Récepteur différentiel à étalement de spectre par séquence directe, **caractérisé par le fait qu'**il comprend une cascade de circuits conformes à l'une quelconque des revendications 1 à 7, le premier circuit (C1) de la cascade recevant, sur une entrée générale (Ed(I), Ed(Q)), les première et seconde parties (I, Q) du signal reçu, chaque circuit de la cascade qui n'est pas à une extrémité de la cascade ayant ses sorties de filtrage (Ss(I), Ss(Q)) et de retard (Sr(I), Sr(Q)) reliées aux entrées de filtrage (Es(I), Es(Q)) et de retard (Er(I), Er(Q)) du circuit qui suit, chacun des moyens de filtrage (50(I), 50(Q)), ajoutant à son résultat, par le circuit de sommation (56(I), 56(Q)), le résultat des moyens de filtrage du circuit précédent et transmettant la somme à l'entrée des moyens de filtrage du circuit suivant, la séquence pseudoaléatoire globale utilisée dans un tel récepteur à cascade de circuits étant alors constituée par l'ensemble des séquences pseudoaléatoires utilisée dans chacun des circuits (C1, C2, C3), le premier circuit de la cascade (C1) étant le seul à avoir ses premier et second circuits de mise en forme (90(I), 90(Q)) activés, le dernier circuit de la cascade (C3) étant le seul à avoir son circuit de multiplication (70) et son circuit d'intégration et de régénération d'horloge (80) activés et ce dernier circuit d'intégration restituant alors l'information sur sa sortie (Sinfo).

**Claims**

1.  Digital circuit for a differential receiver of a direct sequence spread spectrum signal, said signal corresponding to a transmission of a carrier which has been modulated by binary symbols carrying an information, said symbols having been multiplied by a pseudorandom sequence, said circuit comprising:

    a) a first digital processing channel receiving a first part (I) of the signal received, said first part being the part which is in phase with the carrier, said first channel incorporating:

    i) first digital means (50(I)) able to fulfil a first matched filtering function corresponding to a pseudorandom sequence used on transmission,
    ii) first digital means (60(I)) able to fulfil a first delay function,

    b) a second digital processing channel receiving a second part (Q) of the signal received, said second part being the part which is in phase quadrature with the carrier, said second channel incorporating:

    i) second digital means (50(Q)) able to fulfil a second matched filtering function corresponding to said pseudorandom sequence,
    ii) second digital means (60(Q)) able to fulfil a delay function, said circuit being **characterized in that** it also comprises:

    c) a multiplication circuit (70) having:

    - two first inputs, one connected to the output of the first digital filtering means (50(I)) receiving a first filtering signal ($I_k$) and the other connected to the output of the first means able to fulfil the delay function (61(I)) and receiving a first filtered-delayed signal ($I_{k-1}$),
    - two second inputs, one connected to the output of the second digital filtering means (50(Q)) and receiving a second filtered signal ($Q_k$) and the other connected to the output of the second means able to fulfil the delay function (61(Q)) and receiving a second filtered-delayed signal,
    - means for calculating the two direct products between filtered signals and filtered-delayed signals of the first and second channels ($I_k I_{k-1}$), ($Q_k Q_{k-1}$) and the two crossed products between the filtered signal of one channel and the filtered-delayed signal of the other channel ($Q_k I_{k-1}$), ($I_k Q_{k-1}$),
    - means for calculating the sum of the direct products ($I_k I_{k-1} + Q_k Q_{k-1}$) and the difference of the crossed products ($Q_k I_{k-1} - I_k Q_{k-1}$),

    d) an integration and clock regeneration circuit (80) receiving said sum of the direct products and said difference of the crossed products.

2.  Circuit according to claim 1, **characterized in that** it also comprises a digital programming means (90) containing informations able to program in particular the first and second filtering means (50(I), 50(Q)).

3.  Circuit according to claim 1, **characterized in that** the first and second digital means (50(I)) able to fulfil a first and a second filtering functions incorporate a shift register (51(I)), an adder-subtractor (52(I)), a gate (53(I)) having a control input (54(I)) and a signal input (55(I)) receiving a filtered signal and a summating circuit (56(I)) having a first input connected to the output of the adder-subtractor (52(I)) and a second input connected to the output of the gate (53(I)).

4.  Circuit according to claim 3, **characterized in that** the first and second digital means (60(I), 60(Q)) able to fulfil a first and second delay functions incorporate a multiplexer (62(I)) with one input connected to the output of the summating circuit (56(I)) and another input connected to a delayed signal input (Er(I)), and a random access memory (61(I)) having an input connected to the output of the multiplexer (62(I)) and an output an (Sr(I)) supplying a delayed signal.

5.  Circuit according to claim 1, **characterized in that** the integration and clock regeneration circuit (80) comprises:

    - means (100) incorporating a comparator (110) and a register (112) for following the correlation peaks,
    - means (102) incorporating a counter with a capacity equal to the number of chips in the pseudorandom sequence, said counter transmitting a pulse (H) having a rising front when the counter content passes to half the value of the maximum capacity of the counter and a falling front when the counter content passes to the maximum capacity value,

- information restoration means (104) incorporating an accumulator (114) activated as from the integration start time and for a certain period, both being determined by the programming circuit.

**6.** Circuit according to claim 1, **characterized in that** it also comprises a first and a second shaping and summating circuits (95(I), 95(Q)) respectively placed in front of the first and second filtering means (50(I), 50(Q)).

**7.** Circuit according to claim 6, **characterized in that** the digital programming means (90) comprises a shift register having an input (Epro) and outputs connected to the first and second shift registers (51(I), 51(Q)), the first and second adder-subtractors (52(I), 52(Q)) of the first and second filtering means (50(I), 50(Q)), also connected to the first inputs (54(I), 54(Q)) of the first and second gates (53(I), 53(Q)) of the first and second delay means (60 (I), 60(Q)), connected to the multiplication means (70) and to the integration means (80) and finally connected to the first and second shaping and summating means (95(I), 95(Q)).

**8.** Differential receiver with direct sequence spread spectrum, **characterized in that** it comprises a cascade of circuits according to any one of the claims 1 to 7, the first circuit (C1) of the cascade receiving, on a general input (Ed(I), Ed(Q)), the first and second parts (I, Q) of the signal received, each circuit of the cascade not at one end of said cascade having its filtering outputs (Ss(I), Ss(Q)) and delay outputs (Sr(I), Sr(Q)) connected to the filtering inputs (Es(I), Es(Q)) and delay inputs (Er(I), Er(Q)) of the following circuit, each of the filtering means (50(I), 50(Q)), adding to its result by the summation circuit (56(I), 56(Q)), the result of the filtering means of the preceding circuit and transmitting the sum to the input of the filtering means of the following circuit, the overall pseudorandom sequence used in such a circuit cascade receiver then being constituted by all the pseudorandom sequences used in each of the circuits (C1, C2, C3), the first circuit of the cascade (C1) being the only one to have its first and second shaping circuits (90(I), 90(Q)) activated, the final circuit of the cascade (C3) being the only one to have its multiplication circuit (70) and its integration and clock regeneration circuit (80) activated and said final integration circuit then restoring the information on its output (Sinfo).

**Patentansprüche**

**1.** Digitale Schaltung für Differentialempfänger eines Direktsequenz-Spreizspektrumsignals, wobei dieses Signal einem Senden einer Trägerwelle entspricht, die durch binäre, eine Information transportierende Symbole moduliert worden ist, wobei diese Symbole durch eine Pseudozufallssequenz multipliziert worden sind und diese Schaltung dabei umfasst:

a) einen ersten digitalen Verarbeitungskanal, der einen ersten Teil (I) des empfangenen Signals empfängt, wobei dieser erste Teil der mit der Trägerwelle phasengleiche Teil ist und dieser erste Kanal dabei umfasst:

i) erste digitale Einrichtungen (50(I)), fähig eine erste angepasste Filterfunktion auszuüben, einer beim Senden benutzten Pseudozufallssequenz entsprechend,
ii) erste digitale Einrichtungen (60(I)), fähig eine erste Verzögerungsfunktion auszuüben,

b) einen zweiten digitalen Verarbeitungskanal, der einen zweiten Teil (Q) des empfangenen Signals empfängt, wobei dieser zweite Teil der zur Trägerwelle um 90° phasenverschobene Teil ist und dieser zweite Kanal dabei umfasst:

i) zweite digitale Einrichtungen (50(Q)), fähig eine zweite angepasste Filterfunktion auszuüben, der genannten Pseudozufallssequenz entsprechend,
ii) zweite digitale Einrichtungen (60(Q)), fähig eine Verzögerungsfunktion auszuüben, wobei diese Schaltung

**dadurch gekennzeichnet ist, dass** sie außerdem umfasst:
c) eine Multiplizierschaltung (70), umfassend:

- zwei erste Eingänge, der eine verbunden mit dem Ausgang der ersten digitalen Filtereinrichtungen (50 (I)) und ein erste gefiltertes Signal ($I_k$) empfangend, und der andere verbunden mit dem Ausgang der ersten die Verzögerungsfunktion ausübenden Einrichtungen (61(I)) und ein erstes gefiltert-verzögertes

Signal ($I_{k-1}$) empfangend,

- zwei zweite Eingänge, der eine verbunden mit dem Ausgang der zweiten digitalen Filtereinrichtungen (50 (Q)) und ein zweites gefiltert-verzögertes Signal ($Q_k$) empfangend, und der andere verbunden mit dem Ausgang der zweiten die Verzögerungsfunktion erfüllenden Einrichtungen (61(Q)) und ein zweites gefiltert-verzögertes Signal empfangend ($Q_{k-1}$),
- Einrichtungen zur Berechnung der beiden Direktprodukte aus gefilterten und gefiltertverzögerten Signalen des ersten und des zweiten Kanals ($I_kI_{k-1}$), ($Q_kQ_{k-1}$) und der beiden Überkreuzprodukte aus gefiltertem Signal eines Kanals und gefiltertverzögertem Signal des anderen Kanals (($Q_kI_{k-1}$) ($I_kQ_{k-1}$),
- Einrichtungen zur Berechnung der Summe der Direktprodukte($I_kI_{k-1}$+$Q_kQ_{k-1}$) und der Differenz der Überkreuzprodukte ($Q_kI_{k-1}$-$I_kQ_{k-1}$),

d) eine Integrier- und Taktregenerierschaltung (80), die die genannte Summe der Direktprodukte und die genannte Differenz der Überkreuzproduktsignale empfängt.

2. Schaltung nach Anspruch 1, **dadurch gekennzeichnet, dass** sie außerdem eine digitale Programmiereinrichtung (90) umfasst, die Informationen bzw. Daten enthält, um insbesondere die ersten und zweiten Filtereinrichtungen (50(I), 50(Q)) zu programmieren.

3. Schaltung nach Anspruch 1, **dadurch gekennzeichnet, dass** die ersten und zweiten digitalen Einrichtungen (50 (I)) zur Ausübung einer ersten und zweiten Filterfunktion ein Schieberegister (51(I)), einen Addierer-Subtrahierer (52(I)), einen Port (53(I)) mit einem Steuereingang (54(I)) und einem Signaleingang (55(I)), der ein gefiltertes Signal empfängt, und eine Summierschaltung mit einem ersten, mit dem Ausgang des Addierer-Subtrahierers (52 (I)) verbundenen Eingang und einem zweiten, mit dem Ausgang des Ports (53(I)) verbundenen zweiten Eingang umfassen.

4. Schaltung nach Anspruch 3, **dadurch gekennzeichnet, dass** die ersten und zweiten digitalen Einrichtungen (60 (I)), (60(Q)) zur Ausübung einer ersten und zweiten Verzögerungsfunktion umfassen: einen Multiplexer (62(I)) mit einem Eingang, der mit dem Ausgang der Summierschaltung (56(I)) verbunden ist, und einem anderen Eingang, der mit einem Eingang (Er(I)) des verzögerten Signals verbunden ist, und einen Direktzugriff-Speicher (61(I)) mit einem Eingang, der mit dem Ausgang des Multiplexers (62(I)) verbunden ist, und einem Ausgang (Sr(I)), der ein verzögertes Signal liefert.

5. Schaltung nach Anspruch 1, **dadurch gekennzeichnet, dass** die Integrier- und Taktregenerierschaltung (80) umfasst:

- Einrichtungen (100), einen Komparator (110) umfassend und ein Register (112), um die Korrelations-Peaks zu verfolgen,
- Einrichtungen (102), einen Zähler mit einer Kapazität gleich der Anzahl Chips in der Pseudozufallssequenz umfassend, wobei dieser Zähler einen Impuls (H) mit einer ansteigenden Front bzw. Flanke sendet, wenn der Inhalt des Zählers auf den halben Wert der maximalen Kapazität des Zählers übergeht, und eine absteigende Front bzw. Flanke, wenn der Inhalt des Zählers auf den Wert der maximalen Kapazität übergeht,
- Einrichtungen zur Informations- bzw. Datenwiedergabe (104), einen Akkumulator (114) umfassend, aktiv ab einem Zeitpunkt des Integrationsbeginns und während einer bestimmten Dauer, beides festgelegt durch die Programmierschaltung.

6. Schaltung nach Anspruch 1, **dadurch gekennzeichnet, dass** sie außerdem eine erste und eine zweite Formungs- und Summierschaltung (95(I)), 95(Q)) umfasst, jeweils angeordnet vor den ersten und zweiten Filtereinrichtungen (50(I)), 50(Q)).

7. Schaltung nach Anspruch 6, **dadurch gekennzeichnet, dass** die digitalen Programmiereinrichtungen (90) umfassen: ein Schieberegister mit einem Eingang (Epro) und Ausgängen, die verbunden sind mit dem ersten und zweiten Schieberegister (51(I), 51(Q)), dem ersten und dem zweiten Addierer-Subtrahierer (52(I), 52(Q)) der ersten und zweiten Filtereinrichtungen (50(I)), 50(Q)), ebenfalls verbunden mit den ersten Eingängen (54(I), 54 (Q)) des ersten und zweiten Ports (53(I)), 53(Q)) der ersten und zweiten Verzögerungseinrichtungen (60(I)), 60 (Q)), auch noch verbunden mit der Multipliziereinrichtung (70) und mit den Integriereinrichtungen (80) und schließlich verbunden mit den ersten und zweiten Formungs- und Summiereinrichtungen (95(I), (95(Q).

8. Direktsequenzspreizspektrum-Differentialempfänger, **dadurch gekennzeichnet, dass** er eine Schaltungskaskade nach einem der Ansprüche 1 bis 7 umfasst, wobei die erste Schaltung (C1 der Kaskade auf einem Haupteingang (Ed(I), Ed(Q) den ersten und zweiten Teil (I, Q) des empfangenen Signals empfängt, jede Schaltung der Kaskade, die sich nicht an einem Ende der Kaskade befindet, ihre Filterausgänge (Ss(i), Ss(Q)) und Verzögerungsausgänge (Sr(I), SR(Q)) hat, verbunden mit den Filtereingängen (ES(I), ES(Q)) und Verzögerungseingängen Er(I), Er(Q)) der nachfolgenden Schaltung, wobei jede der Filtereinrichtungen (50(I), 50(Q)) ihrem Resultat durch die Summierschaltung (56(I), 56(Q)) das Resultat der vorhergehenden Filtereinrichtungen hinzufügt und die Summe zum Eingang der Filtereinrichtungen der nachfolgenden Schaltung überträgt, und die in einem solchen Kaskadenschaltungsempfänger benutzte globale Pseudozufallssequenz dann durch die Gruppe der Pseudozufallssequenzen gebildet wird, die in jeder der Schaltungen (C1, C2, C3) benutzt werden, wobei die erste Kaskadenschaltung (C1) die einzige mit aktivierter erster und zweiter Formungsschaltungen (90(I), 90(Q)) ist, und die letzte Kaskadenschaltung (C3) die einzige mit aktivierter Multiplizierschaltung (70) und Integrier- und Taktregenerierschaltung (80) ist, und diese letzte Integrierschaltung dann an ihrem Ausgang (Sinfo) die Information ausgibt.

FIG.1

FIG. 2

FIG. 3

FIG. 4

FIG. 5

FIG. 6

FIG. 7

EP 0 778 677 B1